# EUROPÄISCHE PATENTSCHRIFT

(11) **EP 3 401 378 B1**
(45) Veröffentlichungstag und Bekanntmachung des Hinweises auf die Patenterteilung: **02.10.2019**
(21) Anmeldenummer: 17170609.6
(22) Anmeldetag: 11.05.2017
(51) Int. Cl.: C09J 167/02, C09J 193/00, C09J 193/04

(54) **FORMSTABILE, ABREIBBARE KLEBEMASSE**
DIMENSIONALLY STABLE, ABRADABLE ADHESIVE MASS
MÉLANGE D'ADHÉSIF ABRASIF STABLE AU STOCKAGE

(43) Veröffentlichungstag der Anmeldung: 14.11.2018
(73) Patentinhaber: Henkel AG & Co. KGaA, 40589 Düsseldorf (DE)
(72) Erfinder: SCHRIEFERS, Mathias, 41199 Mönchengladbach (DE); HELLWIG, Nils, 47800 Krefeld (DE); KAULISCH, Anna, 42697 Solingen (DE); SCHMIDT, Jennifer, 40764 Langenfeld (DE)

(56) Entgegenhaltungen:
- WO-A1-96/37566

## Beschreibung

Vorliegende Erfindung betrifft eine formstabile Klebemasse, die weitgehend wasser- und lösemittelfrei formuliert ist und durch Abreiben in Kontakt mit dem zu verklebenden Substrat als dünner klebender Film aufgebracht werden kann, der insbesondere für die Verklebung von aus pflanzlichen Fasern gewonnenen Materialien geeignet ist. Die erfindungsgemäße Klebemasse umfasst ein Harz, insbesondere ein natürliches Harz, dessen Summe aus Hydroxyl- und Säurezahl mindestens 100 mg KOH/g beträgt, einen Polyester und Fettsäuren. Die Klebemasse weist eine hohe Temperaturstabilität auf und wird bei Handgebrauch und Kontakt mit der Haut nicht klebrig. Die Erfindung betrifft auch ein Verfahren zum Aufbringen eines klebrigen Films auf ein flächenförmiges Substrat, vorzugsweise auf Papier, durch Abreiben der Klebemasse an der Kontaktstelle mit dem Substrat.

Formstabile Klebemassen, deren Anwendung derart erfolgt, dass ein dünner Film der Klebemasse durch Abreiben an der Kontaktstelle zum Substrat übertragen wird, sind im Stand der Technik bekannt und beispielsweise in Klebestiften zum Verkleben von Papier seit langem realisiert.

Die WO 99/51699 A1 beschreibt weich abreibbare, aber formstabile Klebestifte, bestehend aus einer wässrigen Zubereitung von Stärkeethern und Saccharose als klebende Komponente und einem Seifengel als formgebender Gerüstsubstanz sowie gewünschten falls weiteren Hilfsstoffen. Derartige Klebemassen binden nach dem Abrieb eines dünnen Films allein durch den Wasserverlust und damit rein physikalisch ab. Um die Anwendbarkeit einer solchen Klebemasse über einen längeren Zeitraum zu gewährleisten, gilt es ein Austrocknen der Klebemasse zu verhindern, was durch die Wahl eines geeigneten weitgehend wasserdampfundurchlässigen Verpackungsmittels ermöglicht wird. Das Verpackungsmittel ist häufig auch gleichzeitig Applikator, der als starres Gebilde, in das die Klebemasse eingefüllt ist, zusätzlich formstabilisierend ist, so dass zudem ein größerer Spielraum in der Formulierung der formstabilen Klebemasse besteht. Die DE 10047069 A1 beschreibt einen solchen Applikator für einen Wasser basierten formstabilen Klebestift.

Demgegenüber sind auch wasserfreie formstabile Klebemassen bekannt, die ebenfalls abreibbar formuliert sind. Die WO 96/37566 A1 beschreibt teilkristalline, formstabile Klebemassen auf Basis von Polyestern und/oder Polyurethanen, deren teilkristallines Gefüge durch die bei der Reibung auf einer Substratoberfläche freigesetzte Wärme aufgebrochen wird, so dass sich ein dünner Klebefilm aufbringen lässt, der nach kurzer Zeit wieder teilkristalline Bereiche ausbildet und auf diese Weise abbindet und in der Lage ist, das Substrat zu verkleben. Derartigen Klebemassen werden dort zur Verbesserung des Eigenschaftsprofils verschiedene Additive hinzugesetzt, die die Kristallinität modifizieren oder die Klebrigkeit erhöhen oder Pigmente, Füllstoffe, Weichmacher, Farbstoffe, Antioxidantien und Konservierungsmittel darstellen. Grundsätzlich sind die in der WO offenbarten Klebemassen bereits geeignet, um weithegend verpackungsfrei in den Handel zu gelangen und händisch ohne besonderen Applikator auf Substraten, insbesondere Papier, aufgebracht zu werden.

Es besteht weiterhin Bedarf nach weitgehend wasserfreien Klebemassen, die durch Reibung aktiviert werden können und damit weder einen besonderen Applikator noch eine besondere Verpackung benötigen, um das Abbinden der Klebemasse bereits bei der Lagerung zu verhindern. Eine solche Klebemasse muss ein komplexes Anforderungsprofil erfüllen, das sowohl anwendungsspezifische, verbraucherspezifische als auch umwelthygienische Aspekte umfasst.

Anwendungsspezifisch muss die abgeriebene Klebemasse eine hohe Anfangsklebrigkeit aufweisen, so dass über den Klebefilm miteinander verbundene Substrate bereits in ihrer relativen Position zueinander fixiert sind, während der Klebefilm abbindet und die endgültige Kohäsion der Substrate erfolgt. Idealerweise eignet sich die Klebemasse zum Verkleben von aus pflanzlichen Fasern gewonnenen Materialien.

Von Seiten des Verbrauchers wird erwartet, dass sich eine formstabile Klebemasse, die ohne Applikator direkt händisch auf dem Substrat abreiben lässt, keine Klebrigkeit aufweist, die Haut nicht mit Klebemasse verschmutzt wird und Hautverträglichkeit gewährleistet ist. Weiterhin sollte sich eine derartige Klebemasse in Form eines Stiftes in der Anwendung wie ein Wachsmalstift über das Substrat führen und sich dabei ein Klebefilm aufbringen lassen. Der Abrieb der Klebemasse auf einem flächigen Substrat muss mit wenig Kraftaufwand möglich sein, so dass flexible dünne Substrate wie Papier beim Klebstoffauftrag nicht aufgewellt oder eingerissen werden.

Insgesamt stellt sich die vorliegende Erfindung die Aufgabe eine formstabile, abreibbare Klebemasse bereitzustellen, die wasser- und lösemittelfrei sowie hautverträglich formuliert werden kann und dennoch leicht ohne gesonderten Applikator aufgebracht werden kann und hierfür insbesondere einen niedrigen Abriebwiederstand aufweist, wobei die Klebemasse bei 30 °C nicht permanentklebrig sein soll. Ebenso ist für Lagerung und Transport eine Temperaturstabilität bis zu 70 °C erforderlich. Der Klebstoff sollte vor allem eine hohe Klebkraft für aus pflanzlichen Fasern gewonnenen Materialien, insbesondere Papier und Pappe, besitzen. Zudem soll ein von der Klebemasse abgeriebener Klebefilm ausreichend Anfangshaftung generieren, so dass der Anwender die zu verklebenden Substrate nicht bis zum Abbinden verpressen muss, um eine ausreichende Verklebung herbeizuführen.

Dieses Aufgabenspektrum wird überraschenderweise dadurch gelöst, dass eine Klebemasse formuliert wird, die im Wesentlichen aus einem Harz, insbesondere einem natürlichen Harz, dessen Summe aus Hydroxyl- und Säurezahl mindestens 100 mg KOH pro Gramm des Harzes beträgt, einem Polyester und Fettsäuren besteht.

Die vorliegende Erfindung betrifft demnach eine formstabile Klebemasse enthaltend
a) 45 - 85 Gew.-% mindestens eines Harzes, der eine Summe aus Hydroxyl- und Säurezahl von mindestens 100 mg KOH pro Gramm des Harzes aufweist;
b) 5 - 50 Gew.-% mindestens eines Polyesters, der kein Harz gemäß Komponente a) ist;
c) 5 - 20 Gew.-% mindestens einer C12-C22 Fettsäure.

Eine Zubereitung ist im Sinne der vorliegenden Erfindung formstabil, wenn eine zum Zylinder ausgeformte Masse der Zubereitung (10 Gramm) mit einer Grundfläche von 2 cm² bei Einwirkung einer stetig anwachsenden Kraft senkrecht zur Grundfläche des Zylinders bei 30 °C und 50% relativer Luftfeuchte erst oberhalb eines Druckes von 20 N/cm² irreversibel deformiert wird. Die Einwirkung der Kraft und die Bestimmung des Eintritts der Deformation kann mittels eines Kraftmessgerätes verfolgt werden, bspw. mittels dem Texture Analyser TA-XT HiR (Stable Micro Systems Ltd.).

Formstabile Klebemassen werden üblicherweise dadurch bereitgestellt, dass die Komponenten a) und b) jeweils im Wesentlichen, also mindestens zu 50 Gew.-% bezogen auf die Gesamtheit aller Vertreter, die die jeweilige Komponente darstellen, aus solchen Vertretern ausgewählt sind, die einen Erweichungspunkt Ring-Kugel gemessen gemäß DIN EN ISO 4625-1:2006-04 von mindestens 40 °C aufweisen. Wenn im Folgenden der Erweichungspunkt zur Charakterisierung der Klebemasse oder ihrer Bestandteile herangezogen wird, so ist der Erweichungspunkt Ring-Kugel gemessen gemäß DIN EN ISO 4625-1:2006-04 heranzuziehen. Konsequenterweise zeichnet sich eine erfindungsgemäß bevorzugte Klebemasse aufgrund der zuvor durch den Fachmann vorgenommenen Auswahl der Rohstoffe dadurch aus, dass die Masse einen Erweichungspunkt von mindestens 40 °C, besonders bevorzugt von mindestens 60 °C, jedoch vorzugsweise von weniger als 150 °C, besonders bevorzugt von weniger als 100 °C aufweist.

Die Säurezahl ist erfindungsgemäß eine experimentell zu bestimmende Messgröße, die ein Maß für die Anzahl der freien Säuregruppen in der jeweils definierten Bezugsmenge ist, beispielsweise pro Gramm des Harzes gemäß Komponente a). Die Säurezahl wird bestimmt, indem eine eingewogene Probe der Bezugsmenge in einem Lösemittelgemisch aus Methanol und destilliertem Wasser im Volumenverhältnis 3 : 1 gelöst und anschließend mit 0,05 mol/l KOH in Methanol potentiometrisch titriert wird. Die potentiometrische Messung erfolgt mit einer Einstabmesskette (LL-Solvotrode® der Fa. Metrohm; Bezugselektrolyt: 0,4 mol/l Tetraethylammoniumbromid in Ethylenglykol). Die Säurezahl entspricht dabei der hinzugesetzten Menge an KOH pro Gramm der Bezugsmenge im Wendepunkt der potentiometrischen Titrationskurve.

Analog gilt erfindungsgemäß, dass die Hydroxylzahl als Maß für die Anzahl an freien Hydroxylgruppen in der jeweils definierten Bezugsmenge, beispielsweise pro Gramm des Harzes gemäß Komponente a), experimentell durch potentiometrische Titration bestimmt werden kann. Hierfür wird eine eingewogene Probe der Bezugsmenge in einer Reaktionslösung von 0,1 mol/l Phtalsäureanhydrid in Pyridin bei 130 °C für 45 Minuten erwärmt und zunächst mit dem 1,5 fachen Volumen der Reaktionslösung an Pyridin und anschließend mit dem 1,5 fachen Volumen der Reaktionslösung an entionisiertem Wasser (κ < 1 µScm⁻¹) versetzt. Die freigesetzte Menge an Phtalsäure wird in diesem Gemisch mittels 1 M Natronlauge titriert. Die potentiometrische Messung erfolgt mit einer Einstabmesskette (LL-Solvotrode® der Fa. Metrohm; Bezugselektrolyt: 0,4 mol/l Tetraethylammoniumbromid in Ethylenglykol). Die Hydroxylzahl entspricht dabei der hinzugesetzten Menge an NaOH pro Gramm der Bezugsmenge im Wendepunkt der potentiometrischen Titrationskurve.

Die gemäß vorliegender Erfindung bereitgestellte formstabile Klebemasse weist bei 30 °C eine niedrige Klebrigkeit auf und kann leicht auf Substraten abgerieben werden. Der durch Abreiben herbeigeführte Materialübertrag erfolgt derart, dass auf flächigen Substraten ein dünner klebriger Film der Klebemasse resultiert, der nach kurzer Zeit abbindet, so dass Substrate bei ausreichender Adhäsion zur Klebemasse stoffschlüssig miteinander verbunden werden können. Die niedrige Klebrigkeit der formstabilen Klebemasse ermöglicht, dass die Klebemasse in jeder erdenklichen kommerziell sinnvollen und für den Verbraucher handhabbaren Form nahezu verpackungsfrei in den Verkauf gebracht, vom Verbraucher verpackungsfrei aufbewahrt und angewendet werden kann.

Die niedrige Klebrigkeit und Formstabilität ergibt sich im Wesentlichen aus der Kombination der Komponenten a) und b), wobei der Polyester gemäß Komponente b) kein Harz gemäß Komponente a) ist.

Im Rahmen der vorliegenden Erfindung weist ein Polyester gemäß Komponente b) eine Vielzahl von Estergruppen, also mehr als zwei, auf, wobei gedanklich nach Aufspaltung aller Estergruppen ausschließlich solche Moleküle als Kondensationsbausteine in einer Anzahl jeweils größer als 1 entstehen, die wiederum jeweils zumindest zwei, vorzugsweise nicht mehr als drei, besonders bevorzugt nicht mehr als zwei funktionelle Gruppen ausgewählt aus Hydroxyl- und/oder Carboxyl-Gruppen aufweisen.

Bevorzugt werden hydroxylterminierte Polyester als Komponente b) der erfindungsgemäßen Klebemasse eingesetzt, da diese eine gute Kompatibilität mit den übrigen Komponenten und üblichen Additiven aufweisen. Weiterhin ist bevorzugt, dass derartige Polyester ein bestimmtes Molekulargewicht überschreiten, um einen hinreichend hohen Erweichungspunkt aufzuweisen, so dass eine Hydroxylzahl kleiner als 100 mg KOH, besser kleiner als 60 mg KOH oder gar kleiner als 40 mg KOH jeweils pro Gramm des Polyesters bevorzugt ist.

Daher gilt in einer bevorzugten Ausführungsform der Klebemasse, dass die Polyester gemäß Komponente b) eine Hydroxylzahl kleiner als 100 mg KOH, vorzugsweise kleiner als 60 mg KOH, besonders bevorzugt kleiner als 40 mg KOH jeweils pro Gramm der Polyester gemäß Komponente b) aufweisen, wobei die Säurezahl vorzugsweise kleiner als 10 mg KOH, besonders bevorzugt kleiner als 4 mg KOH pro Gramm der Polyester gemäß Komponente b) ist.

Weiterhin ist bevorzugt, dass mindestens 25 Gew.-%, vorzugsweise mindestens 50 Gew.-% der Polyester gemäß Komponente b) der erfindungsgemäßen Klebemasse einen Erweichungspunkt Ring-Kugel gemessen gemäß DIN EN ISO 4625-1:2006-04 im Bereich von 60 - 100 °C aufweisen.

Ebenso ist es für das Unterbinden der Klebrigkeit der Klebemasse vorteilhaft, wenn Polyester gemäß Komponente b) eingesetzt werden, die als solche unterhalb ihres Erweichungspunktes Kristallinitäten ausbilden. Zudem können sich durch das Hinzuformulieren derartiger von Polyestern b) insgesamt Klebemassen ergeben, die Kristallinitäten aufweisen, die bei Aufnahme von Wärme beispielsweise durch Reibung aufgeschmolzen werden und so das Verflüssigen der Klebemasse und daher den Abrieb eines dünnen Klebefilms zusätzlich erleichtern. Die erfindungsgemäße Klebemasse weist daher vorzugsweise selbst Kristallinitäten im Bereich von 20 °C bis zu ihrem Erweichungspunkt auf, vorzugsweise mit einer Schmelzenthalpie von insgesamt 10 bis 150 J/g, bevorzugt insgesamt 15 bis 80 J/g, besonders bevorzugt insgesamt 20 bis 70 J/g. Das Vorliegen von Kristallinitäten wird mittels Differential Scanning Calorimetry (DSC) bei einer Aufheizrate von 10 K/Minute anhand des Auftretens von endothermen Schmelzpeaks bestimmt, nachdem der jeweilige Polyester beziehungsweise die Probe der Klebemasse, insofern die Kristallinität derselben zu prüfen ist, bis oberhalb der Erweichungstemperatur aufgeheizt und mit einer Abkühlungsrate von 1 K/Minute auf 20 °C gebracht wurde. Eine Kristallinität im Sinne der vorliegenden Erfindung liegt vor, wenn unter den genannten Bedingungen im Temperaturintervall von 20 °C bis zur Temperatur des Erweichungspunktes zumindest ein endothermer Schmelzpeak auftritt. In diesem Zusammenhang sind insbesondere gesättigte Polyester eine bevorzugte Komponente b) der erfindungsgemäßen Klebemasse, ganz besonders bevorzugt Polyester, die aus der Kondensation von C4-C14 Dicarbonsäuren, vorzugsweise Dodecandisäure, und C2-C6 Alkandiolen, vorzugsweise Hexandiol, hervorgehen, und diese Bausteine zu zumindest 80 Gew.-% bezogen auf die Gesamtmenge der Polyester gemäß Komponente b) enthalten sind, wobei eine C4 Dicarbonsäure insgesamt 4 Kohlenstoffatome enthält und analog ein C4 Alkandiol insgesamt 4 Kohlenstoffatome, so dass 1,4-Butandiol ein C4 Alkandiol ist.

Die zusätzliche Anwesenheit von Poylestern gemäß Komponente b), die auf Kondensationsprodukten von Lactonen und Polyolen mit mehr als zwei Hydroxylgruppen beruhen und daher verzweigte Polyester darstellen, kann das Abriebsverhalten der Klebemasse vorteilhaft beeinflussen. In einer besonders bevorzugten Ausführungsform sind daher zusätzlich zur Anwesenheit von Polyestern, die als solche unterhalb ihres Erweichungspunktes Kristallinitäten ausbilden und vorzugsweise aus der Kondensation von C4-C14 Dicarbonsäuren, vorzugsweise Dodecandisäure, und C2-C6 Alkandiolen, vorzugsweise Hexandiol, hervorgehen, auch Polyester, vorzugsweise hydroxylterminierte Polyester, auf Basis von Kondensationsprodukten von Lactonen, vorzugsweise Caprolacton, und Polyolen mit mehr als zwei Hydroxylgruppen, vorzugsweise Triolen mit einem Molgewicht von weniger als 200 g/mol, und deren Co-Polyester in der Klebemasse als Polyester gemäß Komponente b) enthalten, wobei deren Anteil bezogen auf die Polyester gemäß Komponente b) vorzugsweise nicht größer als 15 Gew.-% ist, jedoch vorzugsweise zumindest 5 Gew.-% beträgt.

Bereits geringe Anteile eines Polyesters gemäß Komponente b) von 5 Gew.-% bezogen auf die Klebemasse können der Klebemasse, die zusätzlich das Harz gemäß Komponente a) und Fettsäuren gemäß Komponente c) enthält, die erfindungsgemäß geforderte Formstabilität verleihen. Idealerweise wird hierfür auf einen Polyester zurückgegriffen, der einen Erweichungspunkt im Bereich von 60 -100 °C aufweist. Erfindungsgemäß sind daher Klebemassen bevorzugt, für die der Anteil an Polyestern gemäß Komponente b) bei mindestens 5 Gew.-%, vorzugsweise mindestens 10 Gew.-%, bezogen auf die Klebemasse liegt. Höhere Anteile des Polyester gemäß Komponente b) in der Klebemasse verbessern die Formstabilität und erlauben die Formulierung von Klebemassen, die bei Handgebrauch und Kontakt mit der menschlichen Haut nicht klebrig werden oder deren Klebrigkeit als gering empfunden wird, jedoch sollten keine Werte für deren Anteil überschritten werden, für die die Abreibbarkeit eines Films mit hoher Anfangshaftung nicht mehr gewährleistet ist. Dementsprechend sind solche Klebemassen erfindungsgemäß bevorzugt, für die der Anteil an Polyestern gemäß Komponente b) nicht größer als 50 Gew.-%, vorzugsweise nicht größer als 40 Gew.-%, bezogen auf die Klebemasse ist.

Erfindungsgemäß vermittelt der Harzbestandteil die Anfangshaftung der Klebemasse als abgeriebener Film und zugleich auch dessen Abbindeverhalten im Zusammenspiel mit dem Polyester gemäß Komponente b). Der Harzbestandteil gemäß Komponente a) ist daher einerseits für die Adhäsion zum jeweiligen Substrat entscheidend und andererseits auch für die Kohäsion mitbestimmend. Für hinreichende Anfangshaftung und Adhäsion der abgeriebenen Klebemasse auf dem Substrat nach dem Abbinden, insbesondere auf aus pflanzlichen Fasern gewonnenem Papier, besitzen die Vertreter der Komponente a) die erfindungsgemäß notwendige Anzahl an Hydroxyl- und/oder Säure-Gruppen.

Auch die nachhaltige Verfügbarkeit der Harze und ihre weitgehende umwelthygienische Unbedenklichkeit spielen eine gewichtige Rolle bei der Auswahl geeigneter Harze. Im Rahmen der vorliegenden Erfindung sind daher Klebemassen bevorzugt, für die der Harz gemäß Komponente a) ausgewählt ist aus natürlichen Harzen.

Ein natürliches Harz gemäß DIN 55958 umfasst erfindungsgemäß von Tieren und Pflanzen abgesonderte Ausscheidungen. Dem Fachmann sind derartige Harze bekannt, beispielsweise als Terpentin, Balsam, Gummilack, Kolophonium, Sandarak oder Mastix. Erfindungsgemäß umfasst werden von den natürlichen Harzen auch die modifizierten natürlichen Harze, die beispielsweise durch Hydrierung, intrinsische Additionsreaktionen oder Veresterung aus den natürlichen Harzen erhalten werden.

Die natürlichen Harze als Komponente a) der erfindungsgemäßen Klebemasse sind wiederum vorzugsweise ausgewählt aus Harzsäuren und/oder Harzestern, besonders bevorzugt aus Harzsäuren und/oder Harzester auf Basis der Di-, und/oder Triterpene, die vorzugsweise hydriert und/oder als intrinsische Additionsprodukte vorliegen. Der Begriff Harzester beschreibt erfindungsgemäß die über die Carboxyl-Gruppen der Harzsäuren in Kondensationsreaktionen unter Ausbildung von Ester-Gruppen einfach oder mehrfach modifizierten Harzsäuren. Bevorzugte Vertreter der Diterpen-basierten Harzsäuren und/oder Harzester sind demnach die Abietinsäure, Neoabietinsäure, Lävopimarsäure, Pimarsäure, Palustrinsäure, Agathensäure, Illurinsäure und Podocarpinsäure und der Triterpenbasierten Harzsäuren sind die Elemisäure, Sumarresinolsäure und Siaresinolsäure sowie deren ein- oder mehrfachen Ester mit vorzugsweise jeweils nicht mehr als 6 Kohlenstoffatomen im Alkylrest der Estergruppe.

Für eine gute Anfangshaftung und Adhäsion des auf dem Substrat abgeriebenen und abgebundenen Filmes der Klebemasse ist weiterhin erforderlich, dass der Harzbestandteil der Klebemasse gemäß Komponente a) bei mindestens 45 Gew.-%, vorzugsweise bei zumindest 60 Gew.-%, besonders bevorzugt bei zumindest 70 Gew.-% bezogen auf die Klebemasse liegt. Allerdings sollte für eine hinreichende Kohäsion nach dem Abbinden des auf dem Substrat abgeriebenen und abgebundenen Filmes der Anteil der Harze gemäß Komponente a) erfindungsgemäß nicht oberhalb von 85 Gew.-%, vorzugsweise nicht oberhalb von 80 Gew.-% bezogen auf die Klebemasse liegen.

Ein weiterer essentieller Bestandteil der Klebemasse sind die Fettsäuren gemäß Komponente c) der vorliegenden Erfindung. Eine C12-C22 Fettsäure ist erfindungsgemäß eine Monocarbonsäure, die im aliphatischen Rest mindestens zwölf, aber nicht mehr als zweiundzwanzig Kohlenstoffatome aufweist. Der Fettsäurebestandteil sorgt dafür, dass die Klebemasse leicht im Handgebrauch abgerieben werden kann und dabei eine weitgehend homogenen klebenden Film auf einem flächigen Substrat hinterlässt, ohne dass flexible Substrate wie Papier beim Versuch des Abreibens aufgewellt werden oder reißen. Es hat sich herausgestellt, dass hierfür die Fettsäuren gemäß Komponente c) in einer Rezeptur gemäß der Erfindung gut geeignet und daher notwendigerweise enthalten sind.

Besonders geeignete Vertreter der C12-C22 Fettsäuren sind zunächst gesättigte Fettsäuren, die daher als Fettsäuren gemäß Komponente c) bevorzugt sind. In einer besonders bevorzugten Ausführungsform sind die Fettsäuren gemäß Komponente c) ausgewählt aus C16-C20 Fettsäuren, die wiederum vorzugsweise gesättigt sind. Spezielle Vertreter bevorzugter Fettsäuren gemäß Komponente c) sind daher Myristinsäure, Pentadecansäure, Palmitinsäure, Heptadecansäure, Stearinsäure, Octadecan-12-ol-säure, Nonadecansäure, Arachinsäure, Heneicosansäure und/oder Behensäure, insbesondere Stearinsäure.

Für gute Abriebseigenschaften ist es erforderlich, dass der Anteil der Fettsäuren gemäß Komponente c) bezogen auf die Klebemasse mindestens 5 Gew.-% beträgt. In einer bevorzugten Ausführungsform liegt dieser Anteil bei mindestens 8 Gew.-% der erfindungsgemäßen Klebemasse. Um die Klebrigkeit und Formstabilität der Klebemasse zu gewährleisten sind erfindungsgemäß nicht mehr als 20 Gew.-% der Fettsäuren gemäß Komponente c) enthalten, vorzugsweise nicht mehr als 15 Gew.-% bezogen auf die erfindungsgemäße Klebemasse.

Die erfindungsgemäße Klebemasse besteht mindestens zu 55 Gew.-% aus den zuvor genannten Komponenten a)-c), vorzugsweise mindestens zu 70 Gew, besonders bevorzugt mindestens 80 Gew.-%.

Weitere Komponenten der erfindungsgemäßen Klebemasse setzen sich aus Additiven sowie aus Nebenbestandteilen der eingesetzten Rohstoffe zur Formulierung der Klebemasse zusammen. Die Additive erfüllen dabei vielseitige Funktionen, wobei folgende Additive und ihre jeweilige Funktionalität hervorzuheben sind.

So kann die erfindungsgemäße Klebemasse in einer besonderen Ausführungsform zusätzlich bis zu 5 Gew.-% an Klebrigmachern bezogen auf die Klebemasse ausgewählt aus organischen Verbindungen, die keine Polyester gemäß Komponente b) sind und deren Summe aus Hydroxyl- und Säurezahl unterhalb von 100 mg KOH, vorzugsweise unterhalb von 60 mg KOH, besonders bevorzugt unterhalb von 40 mg KOH pro Gramm der jeweiligen organischen Verbindung liegt. Für einen hinreichenden Effekt ist ein Anteil von zumindest 1 Gew.-% an Klebrigmachern bezogen auf die Klebemasse bevorzugt. Spezielle Vertreter derartiger Klebrigmacher sind vorzugsweise ausgewählt aus natürlichen Harzen, besonders bevorzugt aus Harzestern und Harzalkoholen auf Basis von Di- und Triterpenen. Der Einsatz der Klebrigmacher verleiht der Klebemasse nach deren Abrieb als dünner Film auf einer Papieroberfläche eine erhöhte Anfangshaftung, die beispielsweise beim Verkleben gegenüberliegender Seiten einer Papierfaltung dafür Sorge trägt, dass die über den Klebefilm verbundenen Papierflächen auch ohne Ausüben eines Anpressdruckes bis zum Abbinden der Verklebung verbunden bleiben.

Ebenfalls positiv auf die Anfangshaftung der Klebemasse als auf einem Substrat abgeriebener Film können sich aufgrund ihres weitgehend apolaren Charakters geringe Mengen an Polyolefinwachsen auswirken. Zusätzlich bewirken die Polyolefinwachse eine bessere Langzeitstabilität der Verklebung, so dass bis zu 40 Gew.-%, vorzugsweise bis zu 20 Gew.-%, besonders bis zu 15 Gew.-%, jeweils bezogen auf die Klebemasse an Polyolefinwachsen erfindungsgemäß enthalten sein können, wobei für einen hinreichenden Effekt ein Anteil von zumindest 2 Gew.-%, vorzugsweise zumindest 5 Gew.-%, jeweils bezogen auf die Klebemasse bevorzugt ist. In einer bevorzugten Ausführungsform einer erfindungsgemäßen Klebemasse enthaltend zusätzlich Polyolefinwachse sind selbige ausgewählt aus Copolymerwachsen aus Propylen und Ethylen und/oder mindestens eines verzweigten oder unverzweigten 1-Alkens mit 4 bis 20 Kohlenstoffatomen, und können zur verbesserten Kompatibilität mit der Klebemasse zusätzlich mit Carboxyl-Gruppen modifiziert sein, wobei die Säurezahl vorzugsweise unterhalb von 20 mg KOH pro Gramm des Polyolefinwachses liegt. Ebenso ist vorteilhaft, wenn das additivierte Polyolefinwachs amorph ist und somit keine Kristallinitäten im Bereich von 20 °C bis zum Erweichungspunkt entsprechend der bereits im Zusammenhang mit der Kristallinität des Polyesters gemäß Komponente b) beschriebenen Definition aufweist. Neben der Anfangshaftung erhöhen die Polyolefinwachse zudem die Elastizität der Klebemasse, so dass beispielsweise Klebestifte auf Basis einer entsprechend additivierten erfindungsgemäßen Klebemasse bereitgestellt werden können, die weniger bruchempflindlich sind, was insbesondere bei verpackungsfreien Darreichungs- und Anwendungsformen der erfindungsgemäßen Klebemasse von Vorteil ist.

Für erfindungsgemäße Klebemassen, deren Klebrigkeit bei verpackungsfreier Anwendung der Klebemasse und Abrieb eines Klebefilmes von Hand als zu unangenehm empfunden wird, kann der Zusatz von pyrogenen Kieselsäuren bis zu einer Menge von 15 Gew.-% bezogen auf die Klebemasse geeignet sein unter Bewahrung der übrigen Parameter wie Anfangshaftung, Abreibbarkeit und Abbindeverhalten die Klebrigkeit der formstabilen Darreichungsform zu reduzieren, wobei für eine spürbare Abmilderung der Klebrigkeit vorzugsweise mindestens 1 Gew.-% der pyrogenen Kieselsäure additiviert werden müssen.

Weiterhin kann es zur Verbesserung des Abriebs der Klebemasse auf einem flächigen Substrat vorteilhaft sein, dass die Klebemasse zusätzlich bis zu 5 Gew.-% an Niotensiden enthält, die vorzugsweise einen HLB-Wert im Bereich von 12-18 aufweisen und besonders bevorzugt ausgewählt sind aus mehrfach alkoxylierten C12-C22 Fettalkoholen, ganz besonders bevorzugt aus mehrfach ethoxylierten C12-C22 Fettalkoholen mit vorzugsweise mehr als 20 EO Einheiten. Für einen hinreichenden Effekt ist ein Anteil von zumindest 0,5 Gew.-% an Niotensiden bezogen auf die Klebemasse bevorzugt.

Die erfindungsgemäße Klebemasse zeichnet sich dadurch aus, dass sie lösemittel- und wasserfrei formuliert werden kann und daher ein Abbinden der Klebemasse durch physikalischen Lösemittel- oder Wasserverlust nicht stattfindet. In einer bevorzugten Ausführungsform enthält die erfindungsgemäße Klebemasse daher weniger als 5 Gew.-%, vorzugsweise weniger als 1 Gew.-% an Wasser. In einer weiteren bevorzugten Ausführungsform enthält die erfindungsgemäße Klebemasse weniger als 5 Gew.-%, besonders bevorzugt weniger als 1 Gew.-%, jeweils bezogen auf die Klebemasse an organischen Verbindungen mit einem Siedepunkt bei 20 °C und 1013 mbar unterhalb von 100 °C.

Weiterhin zeichnet sich die erfindungsgemäße Klebemasse dadurch aus, dass sie frei von Polyurethanen und Polymeren und/oder Copolymeren auf Basis von (Meth)acrylaten als Gerüstsubstanzen formuliert werden kann. In einer bevorzugten Ausführungsform ist der Anteil an polymeren Verbindungen, die Urethan-Gruppen aufweisen, insgesamt weniger als 10 Gew.-%, besonders bevorzugt weniger als 5 Gew.-%, und ganz besonders bevorzugt weniger als 1 Gew.-% jeweils bezogen auf die Klebemasse. Analog existiert eine bevorzugte Ausführungsform, in der der Anteil an Acrylat- und/oder Methacrylat-Struktureinheiten kleiner als 10 Gew.-%, besonders bevorzugt kleiner als 5 Gew.-%, ganz besonder bevorzugt kleiner als 1 Gew.-%, jeweils berechnet als C₄H₆O₂ bezogen auf die Klebemasse ist. Der Nachweis von Urethan-Gruppen in einer mittels Gelpermeationschromatographie fraktionierten Probe der Klebemasse kann mittels NMR-Spektroskopie erfolgen. Die quantitative Bestimmung der Acrylat- und/oder Methacrylat-Struktureinheiten kann mit Pyrolyse-GC/MS im Ofen unter Inertgasbedingungen erfolgen.

Ebenso ist die erfindungsgemäße Klebemasse weitgehend salzfrei formuliert, so dass in einer bevorzugten Ausführungsform der Anteil an Alkali- und/oder Erdalkalisalzen kleiner als 5 Gew. %, vorzugsweise kleiner als 1 Gew.-% jeweils berechnet als Anteil der Alkali- und/oder Erdalkalielemente und bezogen auf die Klebemasse ist.

In einer besonders bevorzugten Ausführungsform ist die erfindungsgemäße Klebemasse wie folgt zusammengesetzt:
a) 45 - 85 Gew.-%, vorzugsweise 60 - 80 Gew.-%, mindestens eines Harzes, der eine Summe aus Hydroxyl- und Säurezahl von mindestens 100 mg KOH pro Gramm des Harzes aufweist;
b) 5 - 50 Gew.-%, vorzugsweise 10 - 40 Gew.-%, mindestens eines Polyesters, der kein Harz gemäß Komponente a) ist;
c) 5 - 20 Gew.-%, vorzugsweise 8 - 15 Gew.-%, mindestens einer C12-C22 Fettsäure;
d) bis zu 40 Gew.-%, vorzugsweise 5 - 30 Gew.-%, besonders bevorzugt 8 - 25 Gew.-% an Additiven ausgewählt aus Klebrigmachern, Niotensiden, Polyolefinwachsen und/oder pyrogenen Kieselsäuren;
e) weniger als 5 Gew.-%, vorzugsweise weniger als 1 Gew.-% an Wasser; und
f) einen Rest von weniger als 10 Gew.-%, vorzugsweise weniger als 5 Gew.-%.

Die Prozentangaben beziehen sich jeweils auf die Klebemasse. Der Rest setzt sich im Wesentlichen aus produktionsbedingten Verunreinigungen und Nebenbestandteilen der zur Formulierung eingesetzten Rohstoffe zusammen.

Klebrigmacher im Kontext dieser besonders bevorzugten Ausführungsform sind organische Verbindungen, die keine Polyester gemäß Komponente b) sind und auch vorzugsweise weder Polyolefinwachse noch Niotenside und deren Summe aus Hydroxyl- und Säurezahl unterhalb von 100 mg KOH, vorzugsweise unterhalb von 60 mg KOH, besonders bevorzugt unterhalb von 40 mg KOH pro Gramm der jeweiligen organischen Verbindung liegt. Für die Komponenten a)-d) dieser besonders bevorzugten Ausführungsform der erfindungsgemäßen Klebemasse gelten analog die zuvor spezifizieren und als bevorzugt gekennzeichneten Ausführungsformen.

In einem weiteren Aspekt betrifft die vorliegende Erfindung ein Verfahren zum Aufbringen eines klebrigen Films auf ein flächenförmiges Substrat, vorzugsweise auf Papier, durch Anpressen einer erfindungsgemäßen formstabilen Klebemasse auf das flächenförmige Substrat und nachfolgender relativer Lageänderung unter Beibehaltung eines Anpressdruckes senkrecht zur Flächennormalen des Substrats. Geeignete Substrate sind vorzugsweise aus pflanzlichen Fasern gewonnen, flächenförmig und flexibel, insbesondere Papier.

### Ausführungsbeispiele:

Es wurden Klebemassen gemäß Tabelle 1 formuliert und bei 160 °C aufgeschmolzen und in zylindrischer Stiftform (Durchmesser 2 cm, Länge 6-8 cm) gegossen und für 24 Stunden bei 20 °C gelagert ehe die Handhabbarkeit der scheibenförmigen Klebemassen und die Eigenschaft des abgeriebenen Klebefilms gemäß Tabelle 2 bestimmt wurden.

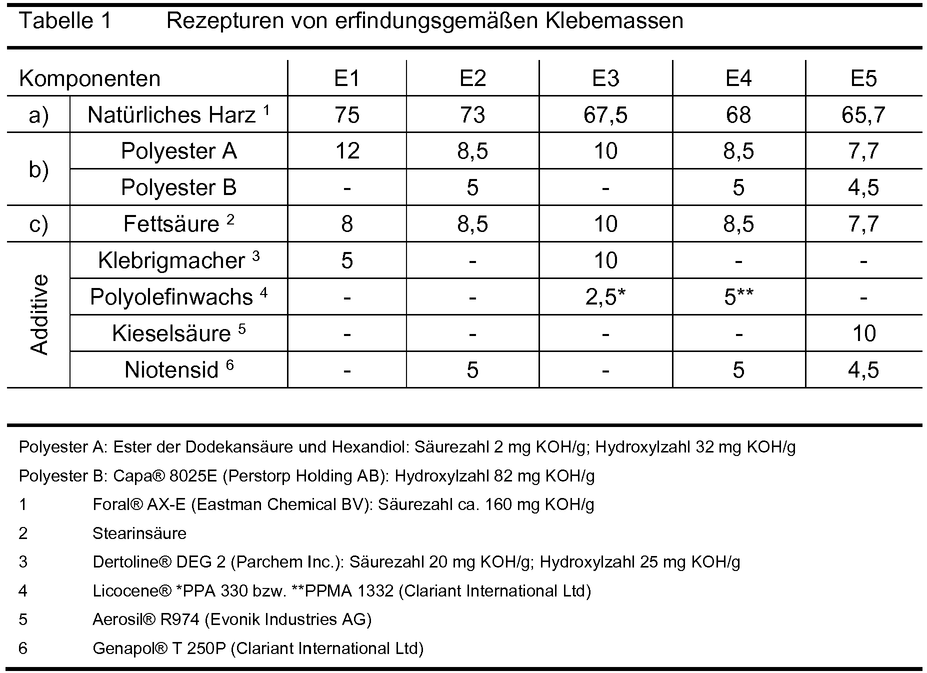

Sämtliche formstabilen Klebemassen konnten bestimmungsgemäß zur Aufbringung eines Klebefilms auf Papier verwendet werden, jedoch ergaben sich qualitative Unterschiede hinsichtlich der in Tabelle 2 aufgeführten Eigenschaften. Das ausgewogenste Eigenschaftsprofil zeigt die Klebemasse E4, die mit Niotensid und Polyolefinwachs additiviert ist und gegenüber der Klebemasse E2, die das Wachs nicht enthält, hinsichtlich Anfangshaftung und Papieranwendung eine Verbesserung erbringt.

| Tabelle 2 | | | | | | | | |
|---|---|---|---|---|---|---|---|---|
| | | Erweichungs punkt ^{a} | Abrieb ^{b} | Haptik ^{c} | Anfangshaftung ^{d} | Applikationsfläche^{e} | | Papierriss ^{f} |
| | | | | | | Kante | Grundfläche | |
| E1 | | 62 °C | 3 | 3 | 3 | 1 | 3 | 4 |
| E2 | | 64 °C | 4 | 3 | 2 | 2 | 5 | 5 |
| E3 | | 64 °C | 3 | 2 | 3 | 2 | 3 | 3 |
| E4 | | 62 C | 4 | 3 | 3 | 3 | 5 | 5 |
| E5 | | >150 °C | 3 | 4 | 4 | 2 | 5 | 5 |
| Auf einer subjektiven Bewertungsskala von 1-5 bedeuten: | | | | | | | | |
| a | gemessen mit Ring-Kugel gemäß DIN EN ISO 4625-1:2006-04 | | | | | | | |
| b | bestimmt nach 10° Anschnitt des zylindrischen Stiftes und Abrieb über die Schnittfläche auf Papier mit einem Flächengewicht von 80 g/m² und einem Anpressdruck von 5 N/cm² | | | | | | | |
| | von 1: schwergängig, Abrieb vergleichbar mit Radiergummi bis 5: wie Pritt® Original-Stift (Henkel AG & Co. KGaA) | | | | | | | |
| c | rein haptische Bewertung durch Auflegen der Handinnenfläche für 1 Sekunde | | | | | | | |
| | von 1: hohe Klebrigkeit vergleichbar mit Pattex® Montageband 19mm (Henkel AG & Co. KGaA) bis 5: glatt, nicht klebrig vergleichbar mit Wachsmalstift | | | | | | | |
| d | bestimmt nach Verklebung eines DIN A4 Blattes Papier mit 160 g/m² Flächengewicht, das gemäß b an den Längskante mit einem Klebefilm versehen wurde und anschließend mit der gegenüberliegenden Längsseite mit derselben Seite des Blattes zu einer Röhre verklebt wird, wonach die Röhre unmittelbar so auf einen glatten Untergrund aufgestellt wird, dass die verklebten Längsseiten orthogonal zum Untergrund weisen. Gemessen wird die Zeit in Sekunden bis die Verklebung sich aufgrund der Papierspannung löst. | | | | | | | |
| | 1: Null Sekunden, 2: weniger als 2 Sekunden, 3: weniger als 5 Sekunden, 4: weniger als sieben Sekunden, 5: mehr als sieben Sekunden | | | | | | | |
| e | Beurteilung des abgeriebenen Filmes über die Kante des zylindrischen Stiftes im 10° Winkel zur Papieroberfläche (80 g/m²) oder über die Grundfläche nach Anschnitt wie unter b jeweils mit einem Anpressdruck von 5 N/cm² | | | | | | | |
| | von 1: kein homogener Film bis 5: leichte Bildung eines homogenen Filmes | | | | | | | |
| f | bestimmt nach Verklebung eines Blattes Papier mit 80 g/m² Flächengewicht, das gemäß b mit einem Klebefilm versehen wurde und anschließend zur Verklebung gefaltet und nach 1 Stunde bei 20°C wieder auseinander gezogen wird. | | | | | | | |
| | 1: kein Papierriss, 2: weniger als 30%, 3: weniger als 60%, 4: weniger als 90%, 5: mehr als 90% der Klebefläche zeigt Papierausriss | | | | | | | |

## Patentansprüche

1. Formstabile Klebemasse enthaltend
a) 45 - 85 Gew.-% mindestens eines Harzes, der eine Summe aus Hydroxyl- und Säurezahl von mindestens 100 mg KOH pro Gramm des Harzes gemessen wie in der Beschreibung ausgeführt aufweist;
b) 5 - 50 Gew.-% mindestens eines Polyesters, der kein Harz gemäß Komponente a) ist;
c) 5 - 20 Gew.-% mindestens einer C12-C22 Fettsäure.

2. Klebemasse gemäß Anspruch 1, **dadurch gekennzeichnet, dass** das mindestens eine Harz ausgewählt ist aus natürlichen Harzen, vorzugsweise aus Harzsäuren und/oder Harzestern, besonders bevorzugt aus Harzsäuren und/oder Harzestern auf Basis der Di- und/oder Triterpene, die wiederum vorzugsweise hydriert vorliegen.

3. Klebemasse gemäß einem oder beiden der vorherigen Ansprüche, **dadurch gekennzeichnet, dass** der Anteil der Harze gemäß Komponente a) bezogen auf die Klebemasse mindestens 60 Gew.-%, vorzugsweise mindestens 70 Gew.-%, jedoch vorzugsweise nicht mehr als 80 Gew.-% beträgt.

4. Klebemasse gemäß einem oder mehreren der vorherigen Ansprüche, **dadurch gekennzeichnet, dass** die Polyester gemäß Komponente b) eine Hydroxylzahl von kleiner als 100 mg KOH, vorzugsweise von kleiner als 60 mg KOH, besonders bevorzugt von kleiner als 40 mg KOH jeweils pro Gramm der Polyester gemäß Komponente b) aufweisen, wobei die Säurezahl vorzugsweise kleiner als 10 mg/KOH, besonders bevorzugt kleiner als 4 mg/KOH pro Gramm der Polyester gemäß Komponente b) ist.

5. Klebemasse gemäß einem oder mehreren der vorherigen Ansprüche, **dadurch gekennzeichnet, dass** mindestens 25 Gew.-%, vorzugsweise mindestens 50 Gew.-% der Polyester gemäß Komponente b) einen Erweichungspunkt Ring-Kugel gemessen gemäß DIN EN ISO 4625-1:2006-04 im Bereich von 60 - 100 °C aufweisen.

6. Klebemasse gemäß einem oder mehreren der vorherigen Ansprüche, **dadurch gekennzeichnet, dass** der Anteil der Polyester gemäß Komponente b) bezogen auf die Klebemasse mindestens 10 Gew.-%, jedoch vorzugsweise nicht mehr als 40 Gew.-% beträgt.

7. Klebemasse gemäß einem oder mehreren der vorherigen Ansprüche, **dadurch gekennzeichnet, dass** der Anteil der Fettsäuren gemäß Komponente c) bezogen auf die Klebemasse mindestens 8 Gew.-%, jedoch vorzugsweise nicht mehr als 15 Gew.-% beträgt.

8. Klebemasse gemäß einem oder mehreren der vorherigen Ansprüche, **dadurch gekennzeichnet, dass** zusätzlich bis zu 5 Gew.-% an Klebrigmachern, die keine Polyester gemäß Komponente b) sind und deren Summe aus Hydroxyl- und Säurezahl unterhalb von 100 mg KOH, vorzugsweise unterhalb von 60 mg KOH, pro Gramm der jeweiligen organischen Verbindung liegt.

9. Klebemasse gemäß einem oder mehreren der vorherigen Ansprüche, **dadurch gekennzeichnet, dass** zusätzlich bis zu 5 Gew.-% an Niotensiden enthält, die vorzugsweise einen HLB-Wert im Bereich von 12-18 aufweisen und besonders bevorzugt ausgewählt sind aus mehrfach alkoxylierten C12-C22 Fettalkoholen, besonders bevorzugt aus mehrfach ethoxylierten C12-C22 Fettalkoholen mit vorzugsweise mehr als 20 EO Einheiten.

10. Klebemasse gemäß einem oder mehreren der vorherigen Ansprüche, **dadurch gekennzeichnet, dass** zusätzlich bis zu 40 Gew.-%, vorzugsweise bis zu 20 Gew.-% an Polyolefinwachsen enthalten sind, die vorzugsweise ausgewählt sind aus Copolymerwachsen aus Propylen und Ethylen und/oder mindestens eines verzweigten oder unverzweigten 1-Alkens mit 4 bis 20 C-Atomen, und zusätzlich mit Carboxyl-Gruppen modifiziert sein können.

11. Klebemasse gemäß einem oder mehreren der vorherigen Ansprüche, **dadurch gekennzeichnet, dass** die Masse weniger als 5 Gew.-%, vorzugsweise weniger als 1 Gew.-% an Wasser enthält.

12. Klebemasse gemäß einem oder mehreren der vorherigen Ansprüche, **dadurch gekennzeichnet, dass** die Masse wie folgt zusammengesetzt ist:
a) 45 - 85 Gew.-% mindestens eines Harzes, der eine Summe aus Hydroxyl- und Säurezahl von mindestens 100 mg KOH pro Gramm des Harzes aufweist;
b) 5 - 50 Gew.-% mindestens eines Polyesters, der kein Harz gemäß Komponente a) ist;
c) 5 - 20 Gew.-% mindestens einer C12-C22 Fettsäure;
d) bis zu 40 Gew.-% an Additiven ausgewählt aus Niotensiden, Polyolefinwachsen; pyrogenen Kieselsäuren und/oder Klebrigmachern;
e) weniger als 5 Gew.-% an Wasser; und
f) einen Rest von weniger als 10 Gew.-%.

13. Klebemasse gemäß einem oder mehreren der vorherigen Ansprüche, **dadurch gekennzeichnet, dass** selbige Kristallinitäten, die wie in der Beschreibung ausgeführt gemessen wurden, im Bereich von -40 °C bis +120 °C vorzugsweise mit einer Schmelzenthalpie von insgesamt 10 bis 150 J/g, bevorzugt insgesamt 15 bis 80 J/g, besonders bevorzugt insgesamt 20 bis 70 J/g aufweist.

14. Klebemasse gemäß einem oder mehreren der vorherigen Ansprüche, **dadurch gekennzeichnet, dass** die Masse einen Erweichungspunkt Ring-Kugel gemessen gemäß DIN EN ISO 4625-1:2006-04 von mindestens 40 °C, vorzugsweise mindestens 60 °C, jedoch vorzugsweise von weniger als 150 °C, besonders bevorzugt von weniger als 100 °C aufweist.

15. Verfahren zum Aufbringen eines klebrigen Films auf ein flächenförmiges Substrat, vorzugsweise auf Papier, durch Anpressen der formstabilen Klebemasse nach einem oder mehreren der vorherigen Ansprüche auf das flächenförmige Substrat und nachfolgender relativer Lageänderung unter Beibehaltung eines Anpressdruckes senkrecht zur Flächennormalen des Substrats.

## Claims

1. A dimensionally stable adhesive substance, containing
a) 45-85 wt.% of at least one resin having a sum of the hydroxyl and acid number of at least 100 mg KOH per gram of the resin, measured as in the description;
b) 5-50 wt.% of at least one polyester which is not a resin according to component a);
c) 5-20 wt.% of at least one C12-C22 fatty acid.

2. The adhesive substance according to claim 1, **characterized in that**
the at least one resin is selected from natural resins, preferably from resin acids and/or resin esters, particularly preferably from resin acids and/or resin esters based on the di- and/or triterpenes, which in turn are preferably hydrogenated.

3. The adhesive substance according to one or both of the preceding claims, **characterized in that**
the proportion of the resins according to component a), based on the adhesive substance, is at least 60 wt.%, preferably at least 70 wt.%, but preferably not more than 80 wt.%.

4. The adhesive substance according to one or more of the preceding claims, **characterized in that**
the polyesters according to component b) have a hydroxyl number of less than 100 mg KOH, preferably less than 60 mg KOH, particularly preferably less than 40 mg KOH, in each case per gram of the polyesters according to component b), the acid number preferably being less than 10 mg/KOH, more preferably less than 4 mg/KOH per gram of the polyesters according to component b).

5. The adhesive substance according to one or more of the preceding claims, **characterized in that**
at least 25 wt.%, preferably at least 50 wt.%, of the polyesters according to component b) have a ring-and-ball softening point measured in accordance with DIN EN ISO 4625-1:2006-04 in the range of from 60-100 °C.

6. The adhesive substance according to one or more of the preceding claims, **characterized in that**
the proportion of the polyesters according to component b), based on the adhesive substance, is at least 10 wt.%, but preferably not more than 40 wt.%.

7. The adhesive substance according to one or more of the preceding claims, **characterized in that**
the proportion of the fatty acids according to component c), based on the adhesive substance, is at least 8 wt.%, but preferably not more than 15 wt.%.

8. The adhesive substance according to one or more of the preceding claims, **characterized in that**
additionally up to 5 wt.% of tackifiers are present which are not polyesters according to component b) and of which the sum of the hydroxyl and acid number is less than 100 mg KOH, preferably less than 60 mg KOH, per gram of the relevant organic compound.

9. The adhesive substance according to one or more of the preceding claims, **characterized in that**
it additionally contains up to 5 wt.% of non-ionic surfactants which preferably have an HLB value in the range of from 12-18 and are particularly preferably selected from polyalkoxylated C12-C22 fatty alcohols, particularly preferably from polyethoxylated C12-C22 fatty alcohols having preferably more than 20 EO units.

10. The adhesive substance according to one or more of the preceding claims, **characterized in that**
additionally up to 40 wt.%, preferably up to 20 wt.%, of polyolefin waxes are contained which are preferably selected from copolymer waxes of propylene and ethylene and/or at least one branched or unbranched 1-alkene having 4 to 20 C atoms, and which may additionally be modified with carboxyl groups.

11. The adhesive substance according to one or more of the preceding claims, **characterized in that**
the substance contains less than 5 wt.%, preferably less than 1 wt.%, of water.

12. The adhesive substance according to one or more of the preceding claims, **characterized in that**
the substance is composed as follows:
a) 45-85 wt.% of at least one resin having a sum of the hydroxyl and acid number of at least 100 mg KOH per gram of resin;
b) 5-50 wt.% of at least one polyester which is not a resin according to component a);
c) 5-20 wt.% of at least one C12-C22 fatty acid;
d) up to 40 wt.% of additives selected from non-ionic surfactants, polyolefin waxes; fumed silicas and/or tackifiers;
e) less than 5 wt.% of water; and
f) a remainder of less than 10 wt.%.

13. The adhesive substance according to one or more of the preceding claims, **characterized in that**
it has the same crystallinities, measured as in the description, in the range of from -40 °C to +120 °C, preferably with a melting enthalpy of in total 10 to 150 J/g, preferably in total 15 to 80 J/g, particularly preferably in total 20 to 70 J/g.

14. The adhesive substance according to one or more of the preceding claims, **characterized in that**
the substance has a ring-and-ball softening point measured according to DIN EN ISO 4625-1:2006-04 of at least 40 °C, preferably at least 60 °C, but preferably less than 150 °C, particularly preferably less than 100 °C.

15. A method for applying an adhesive film to a planar substrate, preferably to paper, by pressing the dimensionally stable adhesive substance according to one or more of the preceding claims onto the planar substrate and subsequently changing the relative position while maintaining contact pressure perpendicularly to the surface normal of the substrate.

## Revendications

1. Composition adhésive de forme stable comprenant
a) 45 à 85 % en poids d'au moins une résine ayant une somme d'indice d'hydroxyle et d'indice d'acide d'au moins 100 mg KOH par gramme de résine, tel que mesuré dans la description ;
b) 5 à 50 % en poids d'au moins un polyester qui n'est pas une résine selon le composant a) ;
c) 5 à 20 % en poids d'au moins un acide gras en C12-C22.

2. Composition adhésive selon la revendication 1, **caractérisée en ce que** la au moins une résine est choisie parmi des résines naturelles, de préférence parmi des acides de résine et/ou des esters de résine, de de manière davantage préférée parmi des acides de résine et/ou des esters de résine à base de di- et/ou triterpènes, qui sont eux-mêmes de préférence hydrogénés.

3. Composition adhésive selon l'une ou les deux revendications précédentes, **caractérisée en ce que** la proportion des résines selon le composant a) par rapport à la composition adhésive est d'au moins 60 % en poids, de préférence d'au moins 70 % en poids, mais de préférence pas plus de 80 % en poids.

4. Composition adhésive selon une ou plusieurs des revendications précédentes, **caractérisée en ce que** les polyesters selon le composant b) ont un indice d'hydroxyle inférieur à 100 mg KOH, de préférence inférieur à 60 mg KOH, de manière davantage préférée inférieur à 40 mg KOH par gramme de polyester selon le composant b), l'indice d'acide étant de préférence inférieur à 10 mg/KOH, de manière davantage préférée inférieur à 4 mg/KOH par gramme de polyester selon le composant b).

5. Composition adhésive selon une ou plusieurs des revendications précédentes, **caractérisée en ce que** au moins 25 % en poids, de préférence au moins 50 % en poids des polyesters selon le composant b) un point de ramollissement par la méthode bille et anneau mesuré selon DIN EN ISO 4625-1:2006-04 dans la plage de 60 à 100 °C.

6. Composition adhésive selon une ou plusieurs des revendications précédentes, **caractérisée en ce que** la proportion des polyesters selon le composant b) par rapport à la composition adhésive est d'au moins 10 % en poids, mais de préférence pas plus de 40 % en poids.

7. Composition adhésive selon une ou plusieurs des revendications précédentes, **caractérisée en ce que** la proportion d'acides gras selon le composant c), par rapport à la composition adhésive, est d'au moins 8 % en poids, mais de préférence pas plus de 15 % en poids.

8. Composition adhésive selon une ou plusieurs des revendications précédentes, **caractérisée en ce qu'**en outre jusqu'à 5 % en poids de tackifiants qui ne sont pas des polyesters selon le composant b) et dont la somme des indices d'hydroxyle et d'acide est inférieure à 100 mg KOH, de préférence inférieure à 60 mg KOH, par gramme du composé organique correspondant.

9. Composition adhésive selon une ou plusieurs des revendications précédentes, **caractérisée en ce qu'**elle contient en outre jusqu'à 5 % en poids de nioténsides qui présentent de préférence une valeur HLB dans la plage de 12 à18 et qui sont choisis de préférence parmi les alcools gras en C12-C22 alcoxylés à plusieurs reprises, de manière davantage préférée parmi les alcools gras en C12-C22 éthoxylés à plusieurs reprises avec plus de 20 unités OE.

10. Composition adhésive selon une ou plusieurs des revendications précédentes, **caractérisée en ce qu'**elle contient en outre jusqu'à 40 % en poids, de préférence jusqu'à 20 % en poids de cires de polyoléfines choisies de préférence parmi les cires copolymères de propylène et d'éthylène et/ou d'au moins un 1-ikène ramifié ou non ramifié ayant 4 à 20 atomes de carbone et pouvant en outre être modifié par des groupes carboxyliques.

11. Composition adhésive selon une ou plusieurs des revendications précédentes, **caractérisée en ce que** la masse contient moins de 5 % en poids, de préférence moins de 1 % en poids, d'eau.

12. Composition adhésive selon une ou plusieurs des revendications précédentes, **caractérisée en ce que** la masse est composée comme suit :
a) 45 à 85 % en poids d'au moins une résine ayant une somme d'hydroxyle et d'indice d'acide d'au moins 100 mg KOH par gramme de résine ;
b) 5 à 50 % en poids d'au moins un polyester qui n'est pas une résine selon le composant a) ;
c) 5 à 20 % en poids d'au moins un acide gras en C12-C22 ;
d) jusqu'à 40 % en poids d'additifs choisis parmi les nioténsides, les cires polyoléfiniques, les silices pyrogéniques et/ou les tackifiants ;
e) moins de 5 % en poids d'eau ; et
f) un reste inférieur à 10 % en poids.

13. Composition adhésive selon une ou plusieurs des revendications précédentes, **caractérisée en ce que** les mêmes cristallinités >mesurées dans la description se situent dans la plage de -40 °C à +120 °C, de préférence avec une enthalpie de fusion de 10 à 150 J/g au total, de préférence de 15 à 80 J/g au total, de manière davantage préférée de 20 à 70 J/g au total.

14. Composition adhésive selon une ou plusieurs des revendications précédentes, **caractérisée en ce que** la masse a un point de ramollissement par la méthode bille et anneau mesuré selon DIN EN ISO 4625-1:2006-04 d'au moins 40 °C, de préférence d'au moins 60 °C, mais de préférence moins de 150 °C, de manière davantage préférée moins de 100 °C.

15. Procédé d'application d'un film collant sur un substrat en forme de feuille, de préférence sur du papier, par pressage de la composition adhésive stable en forme selon une ou plusieurs des revendications précédentes sur le substrat en forme de feuille et changement ultérieur de position relative tout en maintenant une pression de contact perpendiculaire à la surface normale du substrat.
